Europäisches Patentamt

European Patent Office

Office européen des brevets

(11) Publication number: **0 252 690 B1**

(12) **EUROPEAN PATENT SPECIFICATION**

(45) Date of publication of patent specification: **12.08.92**

(51) Int. Cl.⁵: **C08K 5/00**, //(C08K5/00,5:06, 5:11),(C08K5/00,5:10,5:11)

(21) Application number: **87305881.2**

(22) Date of filing: **02.07.87**

(54) Antistatic plasticisers.

(30) Priority: **09.07.86 GB 8616690**

(43) Date of publication of application:
**13.01.88 Bulletin 88/02**

(45) Publication of the grant of the patent:
**12.08.92 Bulletin 92/33**

(84) Designated Contracting States:
**BE DE FR GB IT NL SE**

(56) References cited:
**DE-A- 1 079 832**

**CHEMICAL ABSTRACTS, vol. 103, 1985, page 41, no. 54989t, Columbus, Ohio, US; & CS-A-224 799 (M. PAPPOVA et al.) 01-09-1984**

(73) Proprietor: **BP Chemicals Limited**
**Belgrave House 76 Buckingham Palace Road London, SW1W 0SU(GB)**

(72) Inventor: **Clutterbuck, Paul Geoffrey**
**BP Chemicals Limited**
**Sully South Glamorgan CF6 2YU(GB)**
Inventor: **Wilson, Alan Stuart**
**BP Chemicals Limited**
**Sully South Glamorgan CF6 2YU(GB)**

(74) Representative: **Krishnan, Suryanarayana Kalyana et al**
**BP INTERNATIONAL LIMITED Patents & Agreements Division Chertsey Road Sunbury-on-Thames Middlesex TW16 7LN(GB)**

EP 0 252 690 B1

EP 0 252 690 B1

**Description**

The present invention relates to an antistatic plasticiser for flexible, polar polymers such as plasticised polyvinyl chloride (PVC).

In the context of the present invention polar polymers are those derived from monomers having dipole moments in the range required for compatibility with ester plasticisers. Flexible polar polymers such as synthetic nitrile rubbers, polychloroprene, chlorosulphonated polyethylene and plasticised PVC are well known to accumulate static electricity charges under certain conditions. Static electricity charges can represent a potential hazard especially if such PVC products are to be used in e.g. coal mine conveyor belts, hospital flooring and safety footwear.

In view of this producers of formulations of such polymers have used antistatic agents to reduce build-up of static charges and to promote charge dissipation in their products. The antistatic agents commonly used are cationic, non-ionic or anionic in nature and generally fall under the following groups of materials: amides and amines; quaternary ammonium compounds; polyalkylene glycol derivatives; sulphates and sulphonates; and miscellaneous ethers and esters.

It is also well known that some antistatic agents adversely affect the thermal stability of plasticised PVC. Such adverse effects are most notable when amines, amides and quaternary ammonium compounds are used as antistatic agents.

It has now been found that by using a combination of a specific ester, a surfactant and an antistatic agent for flexible polar polymers having improved performance can be formulated.

Accordingly the present invention is a flexible polar polymer formulation comprising a polar polymer and an antistatic plasticiser which comprises (i) a dicarboxylate ester derivable from a dicarboxylic acid and one or more hydroxy compounds of the general formula:

$R(OCH_2CH_2)_n\text{-}OH$

wherein R is a $C_1$-$C_4$ alkyl group and n is an integer from 1-4, and (ii) a surfactant selected from an ethoxy alcohol and a monocarboxylic acid ester of a polyoxyethylene glycol.

The dicarboxylic acid component of the diester in the antistatic plasticiser is suitably an acid selected from succinic, adipic, glutaric, azelaic and sebacic acids, and is preferably adipic acid.

The hydroxy compound component of the diester in the antistatic plasticiser is suitably butoxyethoxy ethanol. Thus, the preferred diester component of the antistatic plasticiser is dibutoxyethoxy ethyl adipate (DBEEA).

The diester component may be the sole plasticiser in the formulation or may be used in conjunction with other well known plasticiser esters such as e.g. dioctyl phthalate (DOP) which is a typical primary plasticiser component.

The diester component is suitably present in the antistatic plasticiser in an amount of 40 to 95% w/w, preferably from 60 to 90% w/w with respect to the surfactant. Where the surfactant is a monocarboxylic acid ester, it is preferably a polyoxyethylene glycol mono-carboxylate, especially polyoxyethylene glycol mono-oleate. The polyethylene glycol moeity in the mono ester surfactant suitably has a molecular weight in the range of 350 to 460 which corresponds to between 8 and 10 oxyethylene units each molecule of the surfactant.

By the term "ethoxy alcohol" is meant here and throughout the specification that the surfactant is an ether in which the ethoxy function represents a monoethoxy or polyoxyethylene group. In the case of a polyoxyethylene group, it suitably has up to 10 oxyethylene groups, preferably from 2-5 oxyethylene groups. Where the surfactant is a simple ethoxy alcohol, the alcohol moiety suitably has 1 to 20 carbon atoms and is a saturated, aliphatic monohydric alcohol. The monohydric alcohol preferably has 4 to 15 carbon atoms. Ethoxy-1-dodecanol (ethoxy lauryl alcohol), polyoxyethylene-1-dodecanol and mixtures thereof are preferred.

The antistatic plasticiser is suitably present in the formulation in amounts from 10 to 80 parts, preferably from 10 to 50 parts per hundred parts of polar polymer resin (phr) in the formulation.

The antistatic plasticiser can be added to the formulation at any stage during the compounding of the formulation. It is, however, essential to ensure that the antistatic plasticiser is uniformly distributed throughout the mass of the formulation.

Typical flexible polar polymers which may be compounded with the antistatic plasticisers of the present invention include PVC, synthetic nitrile rubbers, polychloroprene and chlorosulphonated polyethylene.

The antistatic plasticisers of the present invention may contain in addition minor amounts of conventional additives such as antioxidants.

2

The present invention is further illustrated with reference to the following Examples.

Examples

A set of PVC formulations were prepared as follows and then tested for their surface resistivity using a method described in BS 3289, 1982 Appendix H (20°C ± 2°C, relative humidity 65% ± 5%).
The results are tabulated in Table 1 below.

PVC - Breon S125/14 (Registered Trade Mark) - 100 phr
DOP - dioctyl phthalate (Primary plasticiser)
Stabilizer - tribasic lead sulphate (5 phr)
Lubricant - AC 629* Polyethylene (*ex Allied Chemical Corp) - (0.5 phr)
Surfactant - Polyoxyethylene glycol monooleate [Nonex 30 (Registered Trade Mark)]
Plasticiser - Dibutoxy ethoxyethyl adipate (DBEEA)

## Surfactant – Polyoxyethylene glycol monooleate [Nonex 30 (Registered Trade Mark)]
## Plasticiser – Dibutoxy ethoxyethyl adipate (DBEEA)

| Test | Primary Plasticiser | Antistat | Surface Resistivity $(10^8$ x ohms) |
|---|---|---|---|
| C | DOP (40 phr) | – | 705 |
| C | DOP (40 phr) | DBEEA (20 phr) | 128 |
| C | DOP (60 phr) | Nonex 30 (5 phr) | 21 |
| Ex 1 | DOP (40 phr) | DBEEA (20 phr) + Nonex 30 (5 phr) | 5.7 |

C – Comparative Test not according to the invention.

phr = part per hundred parts of the resin.

The above results show that the combination of ester and surfactant now proposed significantly reduces the surface resistivity of PVC formulations.
The thermal stability of these formulations was determined using a modified version of ISO thermal stability test (ISOR 305). The results are tabulated in Table 2 below.

| Plasticiser | DOP 60 phr ** | DOP 60 phr ** | DOP 40 phr |
|---|---|---|---|
| Antistat System | – | *Lankrostat QAT 5 phr | DBEEA 20 phr Nonex 30 5 phr |
| Time to develop uniform yellow-brown colour (minutes) | 60+ | 30 | 60+ |

*Registered Trade Mark (ex Lankro Chemicals) which is a proprietary cationic antistat for flexible PVC.

** comparative test, not according to the invention

## Claims

1. A flexible polar polymer formulation comprising a polar polymer and an antistatic plasticiser which comprises (i) a dicarboxylate ester derivable from a dicarboxylic acid and one or more hydroxy compounds of the general formula:

$$R(OCH_2CH_2)_n\text{-}OH$$

wherein R is a $C_1$-$C_4$ alkyl group and n is an integer from 1-4, and (ii) a surfactant selected from an ethoxy alcohol and a monocarboxylic acid ester of a polyoxyethylene glycol.

2. A formulation according to claim 1 wherein the dicarboxylic acid component of the diester (i) is an acid selected from succinic, adipic, glutaric, azelaic and sebacic acids.

3. A formulation according to claim 1 or 2 wherein the hydroxy compound component of the diester (i) is dibutoxyethoxy ethanol.

4. A formulation according to any one of the preceding claims wherein the diester (i) is dibutoxyethyl adipate.

5. A formulation according to any one of the preceding claims wherein the diester (i) is present in the antistatic plasticiser in an amount from 40 to 95% w/w with respect to the surfactant (ii).

6. A formulation according to any one of the preceding claims wherein the polyoxyethylene glycol moiety in the monoester surfactant (ii) has a molecular weight in the range of 350 to 460.

7. A formulation according to any one of the preceding claims wherein the surfactant (ii) is a polyoxyethylene glycol monooleate.

8. A formulation according to any one of the preceding claims 1-5 wherein the surfactant (ii) is an ethoxy alcohol in which the alcohol moiety has 1-20 carbon atoms.

9. A formulation according to claim 8 wherein the surfactant (ii) is selected from ethoxy-1-decanol, polyoxyethylene-1-decanol and mixtures thereof.

10. A formulation according to any one of the preceding claims wherein the antistatic plasticiser is present in said formulation in an amount from 10 to 80 parts per hundred parts of the polar resin

## Revendications

1. Formulation de polymère polaire flexible, comprenant un polymère polaire et un plastifiant antistatique qui comprend (i) un ester dicarboxylique pouvant être dérivé d'un acide dicarboxylique et d'un ou plusieurs composés hydroxyliques de formule générale :

$R(OCH_2CH_2)_n$-OH

dans laquelle R est un groupe alkyle en $C_1$ à $C_4$, n est un nombre entier de 1 à 4, et (ii) un surfactant choisi entre un éthoxyalcool et un ester d'acide monocarboxylique d'un polyoxyéthylèneglycol.

2. Formulation suivant la revendication 1, dans laquelle le composant acide dicarboxylique du diester (i) est un acide choisi entre les acides succinique, adipique, glutarique, azélaïque et sébacique.

3. Formulation suivant la revendication 1 ou 2, dans laquelle le composé hydroxylique du diester (i) est un dibutoxyéthoxyéthanol.

4. Formulation suivant l'une quelconque des revendications précédentes, dans laquelle le diester (i) est l'adipate de dibutoxyéthyle.

5. Formulation suivant l'une quelconque des revendications précédentes, dans laquelle le diester (i) est présent dans le plastifiant antistatique en une quantité de 40 à 95 % en poids/poids par rapport au surfactant (ii).

6. Formulation suivant l'une quelconque des revendications précédentes, dans laquelle le groupement polyoxyéthylèneglycol du surfactant monoester (ii) a un poids moléculaire compris dans la plage de 350 à 460.

7. Formulation suivant l'une quelconque des revendications précédentes, dans laquelle le surfactant (ii) est un mono-oléate de polyoxyéthylèneglycol.

8. Formulation suivant l'une quelconque des revendications 1 à 5 précédentes, dans laquelle le surfactant (ii) est un éthoxyalcool dont la portion alcool a 1 à 20 atomes de carbone.

9. Formulation suivant la revendication 8, dans laquelle le surfactant (ii) est choisi entre l'éthoxy-1-décanol, un polyoxyéthylène-1-décanol et leurs mélanges.

10. Formulation suivant l'une quelconque des revendications précédentes, dans laquelle le plastifiant antistatique est présent en une quantité de 10 à 80 parties pour 100 parties de la résine polaire.

**Patentansprüche**

1. Flexible, polare Polymer-Formulierung, die ein polares Polymer und einen antistatischen Weichmacher umfaßt, der (i) einen Dicarboxylatester, der von einer Dicarbonsäure und einer oder mehreren Hydroxyverbindungen der allgemeinen Formel:

$R(OCH_2CH_2)_n$-OH,

worin R eine $C_1$-$C_4$ Alkyl-Gruppe und n eine ganze Zahl von 1-4 ist, abgeleitet werden kann und (ii) ein oberflächenaktives Mittel, ausgewählt unter einem Ethoxyalkohol und einem Monocarbosäureester eines Polyoxyethylenglykols, umfaßt.

2. Formulierung nach Anspruch 1, worin die Dicarbonsäure-Komponente des Diesters (i) eine Säure ist, ausgewählt unter Bernstein-, Adipin-, Glutar-, Azelain- und Sebazin-Säure.

3. Formulierung nach Anspruch 1 oder 2, worin die Hydroxyverbindung-Komponente des Diesters (i) Dibutoxyethoxyethanol ist.

4. Formulierung nach einem der vorhergehenden Ansprüche, worin der Diester (i) Dibutoxyethyladipat ist.

5. Formulierung nach einem der vorhergehenden Ansprüche, worin der Diester (i) in dem antistatischen Weichmacher in einer Menge von 40 bis 95% Gew./Gew. in bezug auf das oberflächenaktive Mittel (ii) anwesend ist.

6. Formulierung nach einem der vorhergehenden Ansprüche, worin der Polyoxyethylenglykol-Anteil in dem Monoesteroberflächenaktiven-Mittel (ii) ein Molekulargewicht im Bereich von 350 bis 460 aufweist.

7. Formulierung nach einem dem vorhergehenden Ansprüche, worin das oberflächenaktive Mittel (ii) ein Polyoxyethylenglykolmonoooleat ist.

8. Formulierung nach einem der vorhergehenden Ansprüche 1-5, worin das oberflächenaktive Mittel (ii) ein Ethoxy-Alkohol ist, in dem der Alkoholanteil 1-20 Kohlenstoffatome aufweist.

9. Formulierung nach Anspruch 8, worin das oberflächenaktive Mittel (ii) ausgewählt ist unter Ethoxy-1-decanol, Polyoxyethylen-1-decanol und Mischungen davon.

10. Formulierung nach einem der vorhergehenden Ansprüche, worin der antistatische Weichmacher in dieser Formulierung in einer Menge von 10 bis 80 Teilen pro hundert Teilen des polaren Harzes anwesend ist.